(19) Europäisches Patentamt / European Patent Office / Office européen des brevets

(11) **EP 3 807 953 B1**

(12) **EUROPEAN PATENT SPECIFICATION**

(45) Date of publication and mention
of the grant of the patent:
**29.10.2025 Bulletin 2025/44**

(21) Application number: **19729069.5**

(22) Date of filing: **12.06.2019**

(51) International Patent Classification (IPC):
*H01Q 9/04* $^{(2006.01)}$      *H01Q 21/06* $^{(2006.01)}$
*H01Q 21/08* $^{(2006.01)}$      *H01Q 3/26* $^{(2006.01)}$
*H01Q 1/00* $^{(2006.01)}$      *G01S 13/88* $^{(2006.01)}$

(52) Cooperative Patent Classification (CPC):
**H01Q 9/0407; H01Q 1/007; H01Q 3/26;**
**H01Q 21/065; H01Q 21/08**

(86) International application number:
**PCT/EP2019/065386**

(87) International publication number:
**WO 2019/238775 (19.12.2019 Gazette 2019/51)**

(54) **ANTENNA ARRAY SYSTEM FOR MONITORING VITAL SIGNS OF PEOPLE**

GRUPPENANTENNENSYSTEM ZUR ÜBERWACHUNG VON VITALZEICHEN VON PERSONEN

SYSTÈME DE RÉSEAU D'ANTENNES DE SURVEILLANCE DE SIGNES VITAUX DE PERSONNES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.06.2018 LU 100837**

(43) Date of publication of application:
**21.04.2021 Bulletin 2021/16**

(73) Proprietor: **IEE International Electronics &**
**Engineering S.A.**
**6468 Echternach (LU)**

(72) Inventor: **DIEWALD, Andreas**
**54341 Fell (DE)**

(74) Representative: **Office Freylinger**
**P.O. Box 48**
**8001 Strassen (LU)**

(56) References cited:
JP-A- 2004 260 554      US-A1- 2007 279 303
US-A1- 2010 188 289      US-A1- 2017 309 997

• **MOHAMED ADEL SENNOUNI ET AL: "Circular polarized square patch antenna array for wireless power transmission", RENEWABLE AND SUSTAINABLE ENERGY CONFERENCE (IRSEC), 2013 INTERNATIONAL, IEEE, 7 March 2013 (2013-03-07), pages 504 - 508, XP032424522, ISBN: 978-1-4673-6373-0, DOI: 10.1109/IRSEC.2013.6529698**
• **TIMOTHY BROCKETT ET AL: "On the importance of sub-array design in the suppression of undesirable grating lobes", PHASED ARRAY SYSTEMS AND TECHNOLOGY (ARRAY), 2010 IEEE INTERNATIONAL SYMPOSIUM ON, IEEE, PISCATAWAY, NJ, USA, 12 October 2010 (2010-10-12), pages 745 - 750, XP031828587, ISBN: 978-1-4244-5127-2**

# EP 3 807 953 B1

**Description**

**Technical field**

The present invention generally relates to a radar antenna array system adapted for monitoring vital signs of people in closed environments, e.g. people in their home or inside of vehicles or the like.

**Background of the Invention**

Because of the rising amount of elderly people in retirement homes and the non-continuous observation by caretakers, the early recognition of emergency cases becomes more important. To ensure a normal everyday life for these people a conventional vital sign monitor can't be used. Microwave technology turned out to be an effective alternative for such vital sign monitor. There are many activities in microwave-based vital sign monitoring in the last decade as active radar MMICs become less expensive. Radar is the preferable technology for vital sign monitoring because microwaves are invisible and can penetrate through dry clothing and walls. Many activities are based on standard radar systems (classical CW or FMCW systems) with conventional antenna designs and by optimizing the signal processing as for instance disclosed by C. Will, K. Shi, F. Lurz, R. Weigel and A. Koelpin," Intelligent signal processing routine for instantaneous heart rate detection using a Six-Port microwave interferometer," 2015 International Symposium on Intelligent Signal Processing and Communication Systems (ISPACS), Nusa Dua, 2015, pp. 483-487. An overview of radar activities is given by C. Will et al.," Local Pulse Wave Detection using Continuous Wave Radar Systems," IEEE Journal of Electromagnetics, RF and Microwaves in Medicine and Biology, vol. PP, no. 99, pp. 1-1.

From JP 2004260554 A an antenna for an intrusion sensor is known for forming a radiation pattern inside a vehicle to secure high radiation strength by suppressing radiation to an outside of the vehicle. In an array antenna, microstrip antenna (MSA) elements excited in a basic mode are arranged on a dielectric substrate with respectively equal intervals in a lattice. In the respective MSA elements, elements adjacent in the right and left direction of the vehicle are excited by current with phases opposite to each other and with equal amplitude, and elements adjacent in the anteroposterior direction of the vehicle are excited with opposite phases and with a cosine-shaped amplitude distribution by adjusting feeding lines, phase shifters and distributors. This forms a main lobe having four peaks in radiation strength at the right, left, front and back of the radiation pattern of the array antenna arranged on the ceiling of the vehicle interior to thereby be able to form a large difference in radiation strength between the vehicle interior and the vehicle outside.

US 2007/0279303 A1 describes an antenna structure comprising series-fed, planar antenna elements, and an influencing arrangement to influence beam shaping by varying spacing of the antenna elements to each other within a series-feed train. The use of the series feed in conjunction with the variation of the antenna-element spacing permits the configuration of a series-feed train as a column in a group antenna having a column spacing on the order of magnitude of half the free-space operating wavelength. Between at least two adjacent antenna elements, there may be an arrangement to influence a phase between the at least two adjacent antenna elements.

The article by T. Brockett and Y. Rahmat-Samii, "On the importance of sub-array design in the suppression of undesirable grating lobes," 2010 IEEE International Symposium on Phased Array Systems and Technology, 2010, pp. 745-750, doi: 10.1109/ARRAY.2010.5613279, states that a useful strategy in simplifying the development of large antenna arrays is to use sub-arrays as a building-block. When employing this strategy, care must be taken in designing and implementing the sub-arrays because they can be considered array elements that are more than one wavelength apart resulting in array factor grating lobes. In ideal situations, the grating lobes that one would expect are cancelled out by the individual sub-array pattern nulls. However, if care is not taken in the design of the sub-array, errors in that design can distort the sub-array pattern and cause it to no longer properly cancel the grating lobes and ultimately degrade the overall array pattern. Thus, it is essential to understand the mechanism that can cause unwanted distortion in the sub-array pattern. In the article, a number of situations is investigated that can cause unwanted distortions in the sub-array pattern and their effects on the final overall pattern. The focus is on $1 \times 4$ sub-arrays, which are one of the more common sub-array designs that are implemented in large arrays. An analysis of the array factor and simple simulations demonstrate the possible mechanisms of these distortions and illustrate the importance of the sub-array design.

For interior radar applications radar systems are adapted to be mounted on the ceiling of a room. Since room geometries are mostly cubical the distance from the radar sensor to the room corners is between sqrt(2) or even sqrt(3) times longer than to objects directly below the sensor.

Planar antennas (e.g. patch antennas) used for interior radar applications are problematic as having a limited opening angle, mostly +-30° at -3 dB (+- 6-7 dB at +-45°) for patch antenna embodiments. This means that humans present in the corner of a room or in a bed directly located at the walls appear in the radar sensor processing with much lower power than humans present directly below the sensor. This situation shall be described in more detail based on the following example: A typical room has a height of 3 m and a width and length of 6 m. The corners are found under an angle of +- 45° measured from the normal of the radar sensor. Due to antenna characteristic in the TX and the RX case the power drop is -15 dB. Due to the power drop of 4-5 dB caused by free space attenuation the overall power drop is 20 dB. It could be up to 30 dB when people are located in the corner of the room.

Therefore, there is a need for an improved radar antenna array system allowing for a radar sensor processing based at least essentially on the same power independent of peoples being present in room corners, being present directly below the radar sensor or moving around in the room. In other words, there is a need for a radar antenna array system which can reliably monitor people's vital signs while they are present at any part of their home as well as while they move freely around in their home.

**Object of the invention**

It is therefore desirable to provide a radar antenna array system which can monitor people's vital signs while they are present at any part of their home as well as while they move freely around in their home.

This object is attained by the features of claim 1. Advantageous developments of the invention are defined by the sub claims.

**General Description of the Invention**

In order to solve the above mentioned problem, the present invention provides for a radar antenna array system for monitoring vital signs of people present in a closed environment, such as a room or a vehicle, the system comprising

- an array of three-by-one patches configured to shape the farfield pattern in the E-plane by series-feeding, or
- an array of one-by-three patches configured to shape the farfield pattern in the H-plane by parallel-feeding,

wherein the configuration is such that the resulting antenna pattern comprises two or more maxima in order to enhance the radiation into certain areas of said closed environment such as edge areas or the corner areas of said closed environment. It will be noted that the resulting antenna pattern will also have one or more minima in order to minimize the radiation into other areas e.g. in the middle of the room in the vicinity of the mounting location of the antenna array system.

The inventors have been successful in optimizing the technological prerequisite of radar antenna arrays in such a way that the subsequent signal processing benefits from a specially improved antenna beam pattern with 2 TX and 4 RX-channels to illuminate rooms to be monitored perfectly with respect to people present therein. The radar antenna array system of the invention is designed for installation in the center of a room's ceiling in for instance a retirement home. The radar system of the invention in the form of a dedicated microstrip patch antenna array the farfield pattern of which is shaped in the E-plane by series-feeding and in the H-plane by parallel-feeding to attain a heart-shaped pattern allows for compensation of the radiation power in certain directions of the room, as for instance the room's corners. Preferably the antenna system is realized as microstrip patch antenna based on a series fed line array of three individual patch antennas.

In accordance with the invention the E-plane shaping is done be series-feeding and the H-plane shaping is done be parallel feeding. Nevertheless the shaping in the E-plane and/or the H-plane can be done by series-feeding and/or parallelfeeding. Thus the heart-shaped pattern is in both planes, the series-feeding is shaping the heart-shaped pattern in the H-plane and the parallel feeding is shaping the heart-shaped pattern in the E-plane. As both feedings are orthogonal to each other the overall shape is a multiplication of both shapes.

Further in accordance with the invention, the parallel fed patches for shaping the farfield pattern in the H-plane are specified as follows:

| Patch $i$ | Amplitude $A_i$ | Phase [degree] | x-Position [mm] |
|---|---|---|---|
| Patch 1 | 1 | 0 | -6.213 |
| Patch 2 | 2 | 175 | 0 |
| Patch 3 | 1 | 0 | 6.213 |

and the series fed patches for shaping the farfield pattern in the E-plane are specified as follows:

| Patch $i$ | Amplitude $A_i$ | Phase [degree] | y-Position [mm] |
|---|---|---|---|
| Patch 1 | 1 | 0 | 12.426 |
| Patch 2 | 2 | 165 | 6.213 |

(continued)

| Patch *i* | Amplitude $A_i$ | Phase [degree] | y-Position [mm] |
|---|---|---|---|
| Patch 3 | 1 | 0 | 0 |

**It** will be appreciated that according to another aspect, the present invention also provides for a radar antenna array system for monitoring vital signs of people present in a closed environment, such as a room or a vehicle, the system comprising an array of three-by-three patches configured to shape the farfield pattern in the E-and the H-plane by parallel-feeding and/or series-feeding. The configuration is such that the resulting antenna pattern comprises two or more maxima in order to enhance the radiation into certain areas of said closed environment such as edge areas or the corner areas of said closed environment. According to this aspect, the arrays for E- and H-Plane shaping of the farfield pattern are preferably combined into a 3x3 array containing 9 microstrip patch antennas, the resulting farfield pattern, the amplitude and phase shift between each of these patches are specified as follows:

a) patch amplitudes as a function of position

| | X [mm] | -6.213 | 0 | 6.213 |
|---|---|---|---|---|
| Y [mm] | | | | |
| 12.426 | | 0.2 | 0.4 | 0.2 |
| 6.213 | | 0.4 | 0.8 | 0.4 |
| 0 | | 0.2 | 0.4 | 0.2 |

b) patch phases as a function of position

| | X [mm] | -6.213 | 0 | 6.213 |
|---|---|---|---|---|
| Y [mm] | | | | |
| 12.426 | | 165° | 340° | 165° |
| 6.213 | | 0° | 175° | 0° |
| 0 | | -165° | 10° | -165° |

It should be noted that the 3 x 3 array may be a parallel-fed array of three single series-fed 3 x 1 antennas. It could also be implemented by a series-fed array of three single parallel-fed 1 x 3 antennas.

Advantageously, the spacing between the patches is $\lambda/2$ = *6.213mm,* the length of the patches is around $L_p$ = 3.167 to 3,4mm, with different patch lengths, variable spacings appearing between the patches, wherein a space of *2.838mm* exists between patch 2 and patch 3 and of *2.971mm* between patch 1 and patch 2 which space is used for phase adjustment of the patches.

In a preferred embodiment, the space between patch 2 and patch 3 is adjusted in order to reduce the interference of the feeding with the patch reflection.

It should be noted that the radar antenna array system of the invention is not limited to monitoring vital signs of people present in their home, but generally for surveillance tasks in closed environments as for instance in vehicles of all kind, particularly bigger cars having a larger cargo space or passenger compartment.

**Brief Description of the Drawings**

Further details and advantages of the present invention will be apparent from the following detailed description of not limiting embodiments with reference to the attached drawing, wherein:

Fig.1    shows a schematic of an assumed room in a retirement home;
Fig. 2    shows a single-port microstrip patch antenna with reflection $S_{11}$;
Fig. 3    shows an H- and E-plane simulation standard patch antenna;
Fig. 4    shows a characteristic pattern of serial and parallel fed arrays of the antenna of Fig. 3;
Fig. 5    shows an H-plane standard patch, farfield array of the antenna array system of the invention;
Fig. 6    shows an E-plane standard patch, farfield array of the antenna array system of the invention;

Fig. 7      shows the total antenna 3D farfield, simulation farfield array of the antenna array system of the invention;

Fig. 8      shows a second and third patch of the antenna array system of the invention;

Fig. 9      shows a shifted reference plane of a lower patch relative to a subsequent patch;

Fig. 10     shows the second and third patch of the antenna array system of the invention with feeding lines;

Fig. 11     shows a simulation of $S_{21}$ for the middle patch ($i = 2$) of the antenna array system of the invention;

Fig. 12     shows a simulation of $S_{21}$ for the third patch ($i = 3$) of the antenna array system of the invention;

Fig. 13     shows a simulation of the farfield in the E-plane for completed antenna array system of the invention;

Fig. 14     shows a simulation of $S_{11}$ completed antenna array system of the invention;

Fig. 15     shows a simulation of the farfield in the E-plane for completed antenna array system of the invention; and

Fig. 16     shows a simulation of the 3D farfield completed Line Array antenna array system of the invention.

## Description of Preferred Embodiments

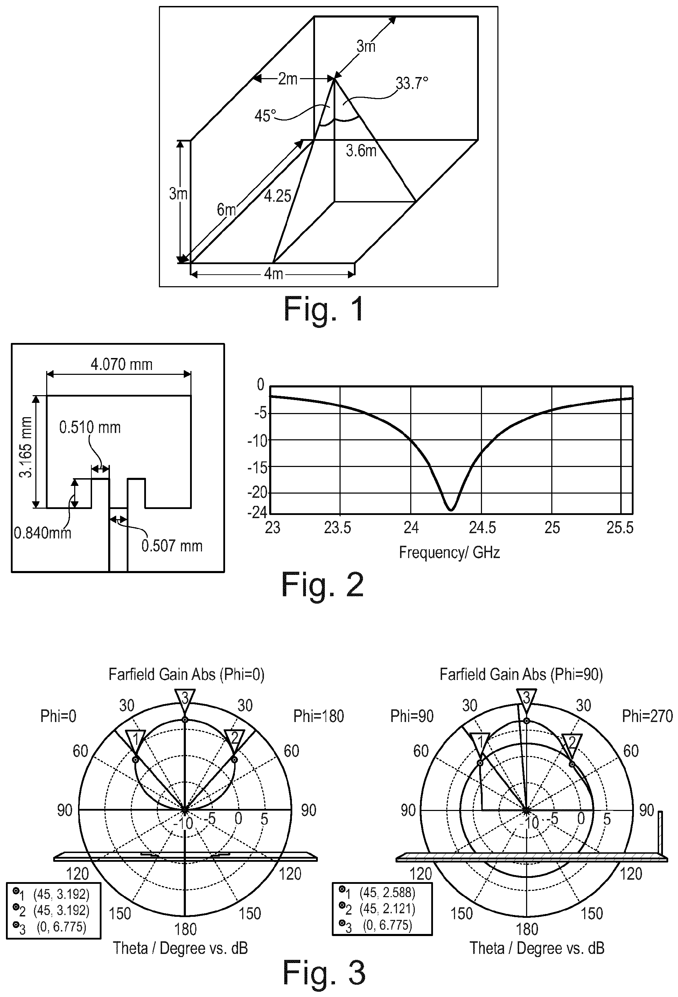

In Fig. 1 the schematic of an assumed room in a retirement home is shown. The average room size in retirement homes is assumed to be 3 meters in height, 6 meters in length and 4 meters in width. In order to monitor the complete floor area in one direction, a triangle with a base of 6 meters and the height of 3 meters is assumed. In the other direction a triangle with a base of 4 meters is assumed for the radiation pattern. As the sensor will be installed in the middle of the ceiling the triangles are symmetric. Thus, an opening angle for one antenna would be $\pm 45°$ and for the other $\pm 33.7°$. The distance from sensor to the floor right below (direction defined as $\varphi = 0°$ and $\theta = 0°$) is 3m, from sensor to the floor-wall corner ($\varphi = 0°$ and $\theta = \pm 45°$) is 4.25m and to the other floor-wall corner ($\varphi = 90°$ and $\theta = +33.7°$) is 3.6m.

An analysis of the radar equation

$$P_r = P_t \cdot \frac{G_{TX} \cdot G_{RX} \cdot \lambda^2 \cdot \sigma}{(4\pi)^3 \cdot R^4} \qquad (1)$$

shows that for targets with constant radar target cross section $\sigma$ the received power at a radar with isotropic radiation ($G_{TX} = G_{RX} = 1 \forall \theta, \varphi$) is factor 1/4 lower when located in the 45° corner instead of to be located directly below the sensor. For an angle of 33.7° corner the radiation is about 1/2 lower. Normally patch antennas radiate their maximum power into broadside direction ($\varphi = 0°$ and $\theta = 0°$) thus the receive power of targets below the sensor is much higher compared to targets in the corner.

The free-space loss due to higher distance at $\theta = \pm 33.7°$ is 4dB, the power reduction of a standard patch antenna under $\theta = \pm 33.7°$ for the transmit antenna is approx. 3 - 4dB. Thus this antenna needs to have a 8dB higher gain into $\varphi = 90°$, $\theta = +33.7°$ compared to broadside direction.

$$\mathrm{P}_r(\varphi = 90°, \theta = 33.7°) = \mathrm{P}_r(\varphi = 0°, \theta = 0°) + 8\mathrm{dB} \qquad (2)$$

The second antenna needs to realize a 10dB higher gain into $\varphi = 0°$, $\theta = +45°$:

$$\mathrm{P}_r(\varphi = 0°, \theta = 45°) = \mathrm{P}_r(\varphi = 0°, \theta = 0°) + 10\mathrm{dB} \qquad (3)$$

The modeling of the proposed antenna and network are simulated with CST MI-CROWAVE STUDIO (S. Müller, R. Thull, M. Huber and A. R. Diewald, "Analysis on microstrip transmission line surface coatings", 2016 Loughborough Antennas & Propagation Conference (LAPC), Loughborough, 2016, pp. 1-4) in the K-band in the frequency domain of 24GHz to 24.25GHz. The antenna design is done for a permittivity of 3.66 which is given in the datasheet of ROGERS and for a permittivity of 3.72 which could be taken from a measurement graph in the datasheet.

## Standard Patch Antenna

To achieve the radiation pattern in both directions, the radiation power and phase shift of each patch antenna need to be determined. In use of a standard microstrip patch antenna and the CST MICROWAVE tool *Farfield Array* the desired radiation pattern can be simulated. That happens by interfering the farfield of the standard patch three times with a space shifting of $\lambda/2$. For all three patches radiation power and phase shifts can be individually adjusted.

The standard patch and the return loss is shown in the Fig. 2.

The return loss values in the whole frequency domain are never more than -10dB. The farfield is split in E- and H-Plane which results from the view of angle. Thus, the H-Plane describes the front view across the feeding ($\varphi = 0°$, $\theta = \pm\pi°$) and the E-Plane describes the side view ($\varphi = 90°$, $\theta = \pm\pi°$). Both are shown in Fig. 3.

The H-Plane shows a symmetrical radiation. Based on this radiation the desired farfield pattern resulting from the equation (3) is achieved. The E-Plane is unsymmetrical, which is based on the one-sided patch feeding, though the main lobe angle can, by use of the radiation power and phase shift, be partly compensated.

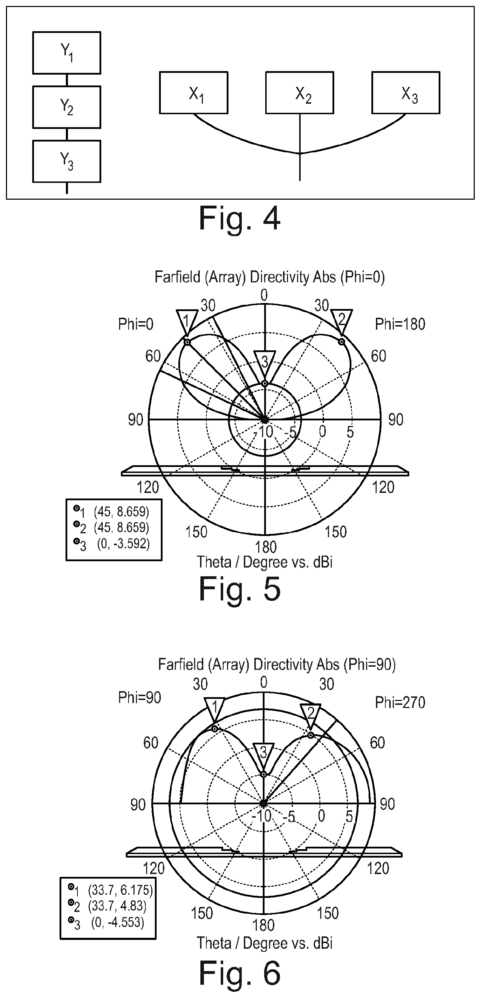

In the later build line array this patch will be used as patch $Y_1$, see Fig. 4. Thus the second and third patch need to be created. Also, this patch will be used as transmitting patch in all three patches of the parallel fed array. The characteristic pattern of both, series and parallel fed arrays are shown below.

**H-plane shaping**

Due to the symmetrical radiation of the standard patch H-Plane, a cardioid radiation pattern results according to the equation 3. In use of the farfield tool with adjusting the amplitude and phase shift of three patches, the farfield pattern of Fig. 5 shows promising results with a gain difference of 12dB.

The specifications for the parallel fed patches are shown in the table 3.1.

Table 3.1: Specifications H-Plane

| Patch $i$ | Amplitude $A_i$ | Phase [degree] | x-Position [mm] |
|---|---|---|---|
| Patch 1 | 1 | 0 | -6.213 |
| Patch 2 | 2 | 175 | 0 |
| Patch 3 | 1 | 0 | 6.213 |

**E-Plane Shaping**

In the E-Plane, these specifications can be transferred. Here a gain difference of 8dB need to be accomplished. Slightly adjusted, the radiation pattern results in Fig. 6, which shows a gain difference of 10dB in the direction of ($\varphi = 90°$, $\theta = 33.7°$) and a difference of 9dB in ($\varphi = 90°$, $\theta = -33.7°$).

These gain differences according to equation 2 are up to 3dB higher which results by reason of the squinting in equation 3. However this is still a sufficient good result, since the main point of a higher gain in certain directions is achieved. The table 3.2 shows the resulting parameters for the series fed patch array.

Table 3.2: Specifications E-Plane

| Patch $i$ | Amplitude $A_i$ | Phase [degree] | y-Position [mm] |
|---|---|---|---|
| Patch 1 | 1 | 0 | 12.426 |
| Patch 2 | 2 | 165 | 6.213 |
| Patch 3 | 1 | 0 | 0 |

**Complete Array**

If these arrays for E- and H-Plane are combined, a 3x3 array results which contains 9 microstrip patch antennas. To show the resulting farfield pattern, the amplitude and phase shift between each of these patches need to be determined. The tables 3.3 and 3.4 are showing these.

Table 3.3: Patch Amplitudes according to Position

| | X [mm] | -6.213 | 0 | 6.213 |
|---|---|---|---|---|
| **Y [mm]** | | | | |
| **12.426** | | 0.2 | 0.4 | 0.2 |
| **6.213** | | 0.4 | 0.8 | 0.4 |
| **0** | | 0.2 | 0.4 | 0.2 |

Table 3.4: Patch Phases according to Position

| | X [mm] | -6.213 | 0 | 6.213 |
|---|---|---|---|---|
| Y [mm] | | | | |
| 12.426 | | 165° | 340° | 165° |
| 6.213 | | 0° | 175° | 0° |
| 0 | | -165° | 10° | -165° |

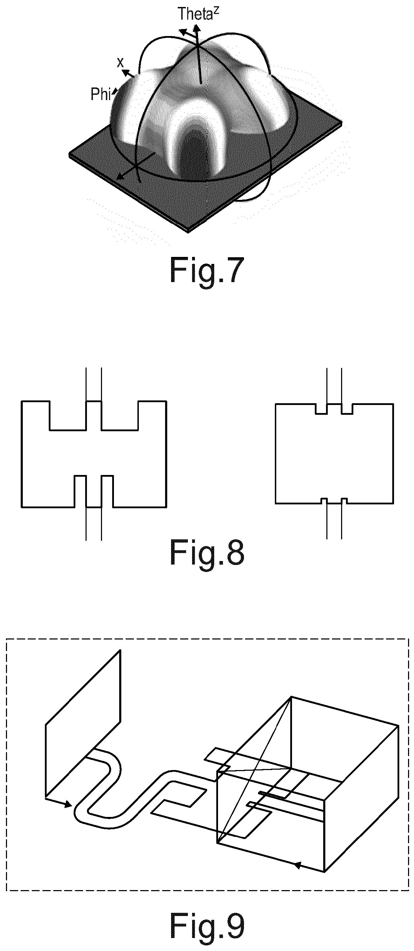

These values inserted in the *Farfield Array* result in a 3D pattern with a higher radiation in the corners as shown in Fig. 7.

## Series fed line array, H-plane

To achieve the radiation pattern according to equation 2, a series fed patch array of three microstrip patch antennas is used. Each single patch is designed for low reflection with $\Gamma \approx 0$ at the feeding port (port 1). In the following the balance between radiated power and transmitted power to port 2 is adjusted. The last patch ($i = 1$) with power absorption of 100% is already finished. The amplitude of the middle patch (i = 2) is twice the amplitude of the last patch which yields a four times higher power. Thus, the second patch needs to accept the power which is radiated by itself and the power which is transmitted to the last antenna. The following table 4.1 shows the transmission coefficients adapted to the given amplitudes. The phase shift between the patches will be adjusted later by conventional delay lines.

Table 4.1: $S_{21}$ of Each Single Patch

| Antenna | Radiaton Power | S21 [db] | S21 [lin.] |
|---|---|---|---|
| Patch 1 | 0.166 | none | none |
| Patch 2 | 0.666 | -7.99 | 0.447 |
| Patch 3 | 0.166 | -0.79 | 0.912 |

## Patch Design, Transmission Adjustment

The adjustment of the recess length $l_1$ at the input port has the most effect on the input reflection. The patch width $l_p$ but also the recess width $l_2$ and recess width $w_2$ at the output port are influencing the transmission coefficient $S_{21}$. Thus, the reflection and the transmission can mostly be controlled independently. First the single patches are created as shown in Fig. 8.

## Feeding Design, Phase Adjustment

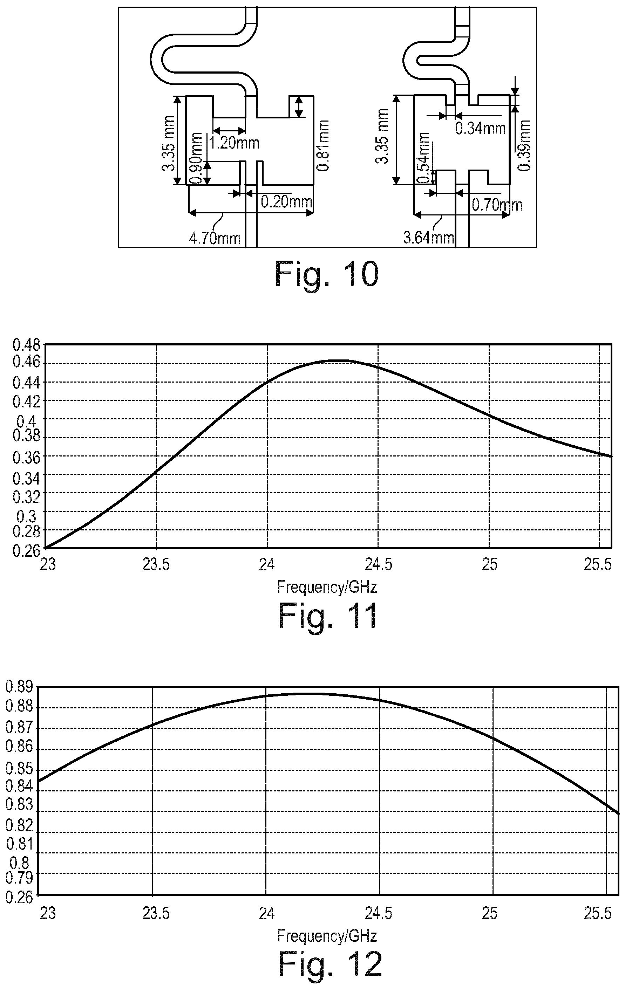

The spacing between the patches is $\lambda/2$ which equals *6.213mm*. The length of the patches is around $L_p = 3.167$ up to 3.4mm. Due to the different patch lengths variable spacings appears between the patches. There is a space of *2.838mm* between patch 2 to patch 3 and of *2.971mm* between patch 1 to patch 2. This space is used for phase adjustment of the several patches. The phase difference corresponding to the specification in table 3.2 is defined from the reference plane of the lower patch which is the patch edge at the ending of the recess to the comparable reference planes of the subsequent patches, shown in Fig. 9. The feeding microstrip lines are designed as short as possible in order to reduce the losses.
The design of the resulting feeding lines is shown in Fig. 10. Compared to Fig. 8 the recess of the third patch is further adjusted. This occurs by reason of the feeding which interferes with the patch reflection.
As shown in Fig. 11 the transmissions of both patches depart less then 3% from the specifications of table 4.1. This is a good result, since the transmission loss of the signal lines were not considered in the farfield array tool.
As shown in Fig. 12 in the third patch a transmission of S21 = 0.89 and the middle patch of S21 = 0.46 are achieved which are close to the specifications of 4.1.

## Simulation Line Array

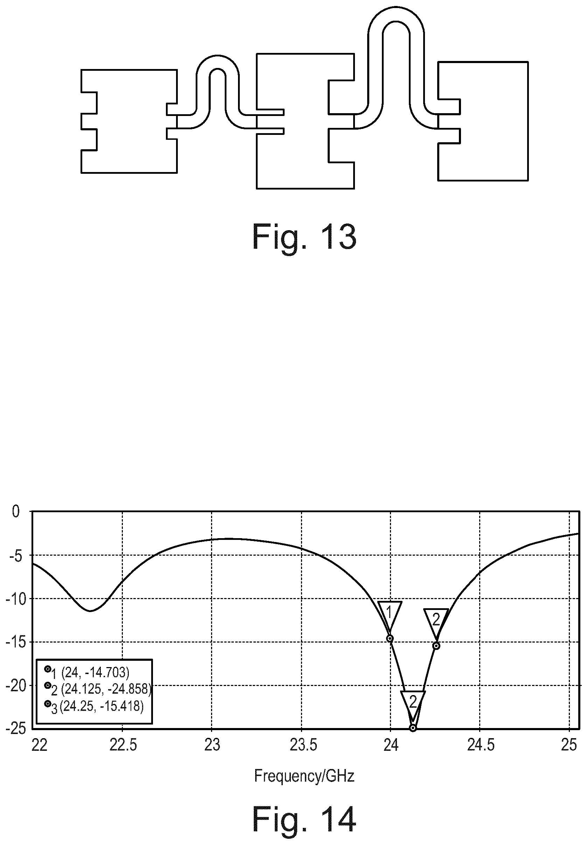

In Fig. 13 the completed one-dimensional antenna Line Array (LA) is shown which results from the connection of Fig. 2 and Fig. 10.
The total antenna length is $l$ = 15,694mm and the maximum width is w = 6,339mm. In Fig. 14 the antenna reflection coefficient is shown by simulation. A reflection of less than -15dB is obtained in the 24 GHz ISM band and the minimal reflection of -24.85dB is reached at the center frequency of 24.125GHz.

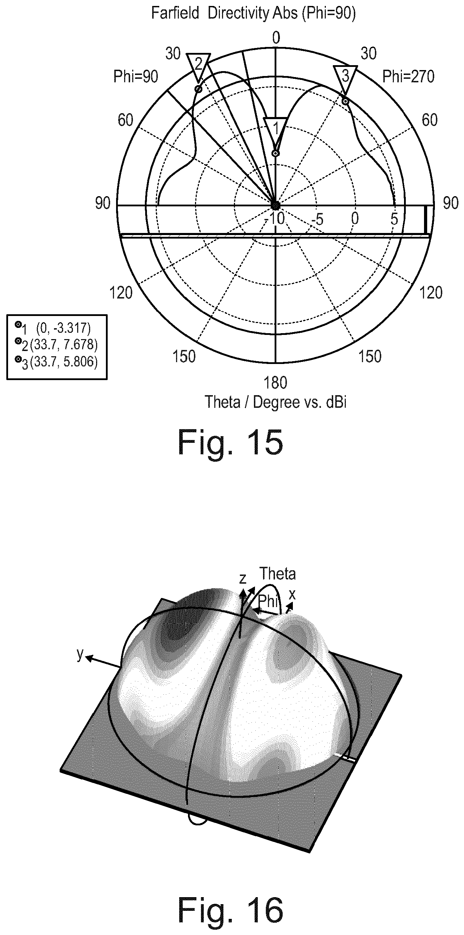

The farfield in the E-plane yields a satisfying pattern with a gain difference of more than 8dB at $\theta = 0°$ compared to $\theta = 33.7°$ which is shown in Fig. 15. Due to the microstrip feeding between the single patches and the antenna feeding from the right, the radiation pattern is squinted. Thus, a symmetric farfield of the Line Array is not achieved.

The total 3D antenna farfield pattern is shown in Fig. 16.

**Claims**

1. A radar antenna array system, which is operable in the K-band frequency domain from 24 GHz to 24.25 GHz, for monitoring vital signs of people in a closed environment that is designed as a room or a vehicle, the system comprising

   - an array of three-by-one patches configured to shape the farfield pattern in the E-plane by series-feeding, or
   - an array of one-by-three patches configured to shape the farfield pattern in the H-plane by parallel-feeding, the configuration being such that the resulting antenna pattern comprises two or more maxima in order to enhance the radiation into certain areas of said closed environment such as edge areas or the corner areas of said closed environment,
   wherein the parallel fed patches for shaping the farfield pattern in the H-plane are specified as follows:

   | Patch $i$ | Amplitude $A_i$ | Phase [degree] | x-Position [mm] |
   |---|---|---|---|
   | Patch 1 | 1 | 0 | -6.213 |
   | Patch 2 | 2 | 175 | 0 |
   | Patch 3 | 1 | 0 | 6.213 |

   and/or wherein the series fed patches for shaping the farfield pattern in the E-plane are specified as follows:

   | Patch $i$ | Amplitude $A_i$ | Phase [degree] | y-Position [mm] |
   |---|---|---|---|
   | Patch 1 | 1 | 0 | 12.426 |
   | Patch 2 | 2 | 165 | 6.213 |
   | Patch 3 | 1 | 0 | 0 |

2. A radar antenna array system, which is operable in the K-band frequency domain from 24 GHz to 24.25 GHz, for monitoring vital signs of people in a closed environment that is designed as a room or a vehicle, the system comprising an array of three-by-three patches configured to shape the farfield pattern in the E- and the H-plane by parallel-feeding and/or series-feeding,

   the configuration being such that the resulting antenna pattern comprises two or more maxima in order to enhance the radiation into certain areas of said closed environment such as edge areas or the corner areas of said closed environment,
   wherein the arrays for E- and H-Plane shaping of the farfield pattern are combined into a 3x3 array containing 9 microstrip patch antennas, the resulting farfield pattern, the amplitude and phase shift between each of these patches are specified as follows:

   a) patch amplitudes as a function of position

   |  | X [mm] | -6.213 | 0 | 6.213 |
   |---|---|---|---|---|
   | Y [mm] |  |  |  |  |
   | 12.426 |  | 0.2 | 0.4 | 0.2 |
   | 6.213 |  | 0.4 | 0.8 | 0.4 |
   | 0 |  | 0.2 | 0.4 | 0.2 |

b) patch phases as a function of position

|  | X [mm] | -6.213 | 0 | 6.213 |
|---|---|---|---|---|
| Y [mm] |  |  |  |  |
| 12.426 |  | 165° | 340° | 165° |
| 6.213 |  | 0° | 175° | 0° |
| 0 |  | -165° | 10° | -165° |

3. The system of claim 2, wherein the array of three-by-three patches comprises a parallel-fed array of three single arrays of three-by-one patches configured to shape the farfield pattern in the E-plane by series-feeding or a series-fed array of three single arrays of one-by-three patches configured to shape the farfield pattern in the H-plane by parallel-feeding.

4. The system of claim 1 or 3, wherein the transmission coefficients of a series fed patch array of three patches adapted to the given amplitudes are specified as follows (S21 of each single patch):

| Antenna | Radiation Power | S21 [db] | S21 [lin.] |
|---|---|---|---|
| Patch 1 | 0.166 | none | none |
| Patch 2 | 0.666 | -7.99 | 0.447 |
| Patch 3 | 0.166 | -0.79 | 0.912 |

wherein the phase shift between the patches is adjusted by delay lines.

5. The system of claim 4, wherein the spacing between the patches is $\lambda/2 = 6.213mm,$ the length of the patches is around $L_p$ = 3.167 to 3,4mm, with different patch lengths, variable spacings appearing between the patches, wherein a space of *2.838mm* exists between patch 2 and patch 3 and of 2.971*mm* between patch 1 and patch 2 which space is used for phase adjustment of the patches.

6. The system of claim 5, wherein the space between patch 2 and patch 3 is adjusted in order to reduce the interference of the feeding with the patch reflection.

**Patentansprüche**

1. Radarantennenanordnungssystem, welches im K-Band-Frequenzbereich von 24 GHz bis 24,25 GHz betreibbar ist, zur Überwachung von Vitalzeichen von Menschen in einer geschlossenen Umgebung, die als ein Raum oder ein Fahrzeug ausgelegt ist, wobei das System Folgendes umfasst:

- eine Anordnung von drei-mal-ein Patches, die dafür konfiguriert sind, das Fernfeldmuster in der E-Ebene durch Reihenspeisung auszuformen, oder
- eine Anordnung von ein-mal-drei Patches, die dafür konfiguriert sind, das Fernfeldmuster in der H-Ebene durch Parallelspeisung auszuformen,
wobei die Konfiguration derart beschaffen ist, dass das resultierende Antennenmuster zwei oder mehr Maxima umfasst, um die Abstrahlung in bestimmte Bereiche der geschlossenen Umgebung wie beispielsweise Randbereiche oder die Eckbereiche der geschlossenen Umgebung zu verbessern,
wobei die parallel gespeisten Patches zur Ausformung des Fernfeldmusters in der H-Ebene wie folgt spezifiziert sind:

| Patch $i$ | Amplitude $A_i$ | Phase [Grad] | x-Position [mm] |
|---|---|---|---|
| Patch 1 | 1 | 0 | -6,213 |
| Patch 2 | 2 | 175 | 0 |

(continued)

| Patch $i$ | Amplitude $A_i$ | Phase [Grad] | x-Position [mm] |
|---|---|---|---|
| Patch 3 | 1 | 0 | 6,213 |

und/oder wobei die reihengespeisten Patches zur Ausformung des Fernfeldmusters in der E-Ebene wie folgt spezifiziert sind:

| Patch $i$ | Amplitude $A_i$ | Phase [Grad] | y-Position [mm] |
|---|---|---|---|
| Patch 1 | 1 | 0 | 12,426 |
| Patch 2 | 2 | 165 | 6,213 |
| Patch 3 | 1 | 0 | 0 |

**2.** Radarantennenanordnungssystem, welches im K-Band-Frequenzbereich von 24 GHz bis 24,25 GHz betreibbar ist, zur Überwachung von Vitalzeichen von Menschen in einer geschlossenen Umgebung, die als ein Raum oder ein Fahrzeug ausgelegt ist, wobei das System eine Anordnung von drei-mal-drei Patches, die dafür konfiguriert sind, das Fernfeldmuster in der E- und der H-Ebene durch Parallelspeisung und/oder Reihenspeisung auszuformen, umfasst,

wobei die Konfiguration derart beschaffen ist, dass das resultierende Antennenmuster zwei oder mehr Maxima umfasst, um die Abstrahlung in bestimmte Bereiche der geschlossenen Umgebung wie beispielsweise Randbereiche oder die Eckbereiche der geschlossenen Umgebung zu verbessern,

wobei die Anordnungen für die E- und H-Ebene-Ausformung des Fernfeldmusters in einer 3x3-Anordnung kombiniert sind, die 9 Mikrostreifenleiter-Patchantennen enthält, wobei das resultierende Fernfeldmuster, die Amplitude und die Phasenverschiebung zwischen jedem dieser Patches wie folgt spezifiziert sind:

a) Patchamplituden in Abhängigkeit von der Position

| | X [mm] | -6,213 | 0 | 6,213 |
|---|---|---|---|---|
| **Y [mm]** | | | | |
| **12,426** | | 0,2 | 0,4 | 0,2 |
| **6,213** | | 0,4 | 0,8 | 0,4 |
| **0** | | 0,2 | 0,4 | 0,2 |

b) Patchphasen in Abhängigkeit von der Position

| | X [mm] | -6,213 | 0 | 6,213 |
|---|---|---|---|---|
| **Y [mm]** | | | | |
| **12,426** | | 165° | 340° | 165° |
| **6,213** | | 0° | 175° | 0° |
| **0** | | -165° | 10° | -165° |

**3.** System nach Anspruch 2, wobei die Anordnung von drei-mal-drei Patches eine parallel gespeiste Anordnung von drei einzelnen Anordnungen von drei-mal-ein Patches, die dafür konfiguriert sind, das Fernfeldmuster in der E-Ebene durch Reihenspeisung auszuformen, oder eine reihengespeiste Anordnung von drei einzelnen Anordnungen von ein-mal-drei Patches, die dafür konfiguriert sind, das Fernfeldmuster in der H-Ebene durch Parallelspeisung auszuformen, umfasst.

**4.** System nach Anspruch 1 oder 3, wobei die an die vorgegebenen Amplituden angepassten Transmissionskoeffizienten einer reihengespeisten Patchanordnung von drei Patches wie folgt spezifiziert sind (S21 jedes einzelnen Patches):

| Antenne | Strahlungsleistung | S21 [db] | S21 [lin.] |
|---------|--------------------|---------|-----------|
| Patch 1 | 0,166 | keiner | keiner |
| Patch 2 | 0,666 | -7,99 | 0,447 |
| Patch 3 | 0,166 | -0,79 | 0,912 |

wobei die Phasenverschiebung zwischen den Patches durch Verzögerungsleitungen eingestellt ist.

**5.** System nach Anspruch 4, wobei der Abstand zwischen den Patches $\lambda/2$ = 6,213 mm ist, die Länge der Patches ungefähr $L_p$ = 3,167 bis 3,4 mm ist, wobei bei verschiedenen Patchlängen veränderliche Abstände zwischen den Patches vorkommen, wobei ein Abstand von 2,838 mm zwischen Patch 2 und Patch 3 und von 2,971 mm zwischen Patch 1 und Patch 2 besteht, wobei der Abstand zur Phaseneinstellung der Patches verwendet wird.

**6.** System nach Anspruch 5, wobei der Abstand zwischen Patch 2 und Patch 3 eingestellt ist, um die Störung der Patchreflexion durch die Speisung zu reduzieren.

## Revendications

**1.** Système de réseau d'antennes radar, qui peut fonctionner dans le domaine fréquentiel de la bande K de 24 GHz à 24,25 GHz, pour surveiller les signes vitaux de personnes dans un environnement clos qui est conçu sous la forme d'une pièce ou d'un véhicule, le système comprenant

- un réseau de patchs trois par un, configuré pour mettre en forme le diagramme de champ lointain dans le plan E par alimentation en série, ou
- un réseau de patchs un par trois configuré pour mettre en forme le diagramme de champ lointain dans le plan H par alimentation en parallèle,
la configuration étant telle que le diagramme d'antenne résultant comprend deux maxima ou plus afin d'améliorer le rayonnement dans certaines zones dudit environnement clos, telles que les zones de bord ou les zones d'angle dudit environnement clos,
dans lequel les patchs alimentés en parallèle pour mettre en forme le diagramme de champ lointain dans le plan H sont spécifiés comme suit :

| Patch $i$ | Amplitude $A_i$ | Phase [degré] | Position x [mm] |
|-----------|-----------------|---------------|-----------------|
| Patch 1 | 1 | 0 | -6,213 |
| Patch 2 | 2 | 175 | 0 |
| Patch 3 | 1 | 0 | 6,213 |

et/ou dans lequel les patchs alimentés en série pour mettre en forme le diagramme de champ lointain dans le plan E sont spécifiés comme suit :

| Patch $i$ | Amplitude $A_i$ | Phase [degré] | Position y [mm] |
|-----------|-----------------|---------------|-----------------|
| Patch 1 | 1 | 0 | 12,426 |
| Patch 2 | 2 | 165 | 6,213 |
| Patch 3 | 1 | 0 | 0 |

**2.** Système de réseau d'antennes radar, qui peut fonctionner dans le domaine fréquentiel de la bande K de 24 GHz à 24,25 GHz, pour surveiller les signes vitaux de personnes dans un environnement clos qui est conçu sous la forme d'une pièce ou d'un véhicule, le système comprenant un réseau de patchs trois par trois configuré pour mettre en forme le diagramme de champ lointain dans les plans E et H par alimentation parallèle et/ou alimentation en série,

la configuration étant telle que le diagramme d'antenne résultant comprend deux maxima ou plus afin d'améliorer le rayonnement dans certaines zones dudit environnement clos, telles que les zones de bord ou les zones d'angle dudit environnement clos,

dans lequel les réseaux pour la mise en forme du diagramme de champ lointain dans les plans E et H sont combinés en un réseau 3x3 contenant 9 antennes patch micro-ruban, le diagramme de champ lointain résultant, l'amplitude et le déphasage entre chacun de ces patchs sont spécifiés comme suit :

a) amplitudes des patchs en fonction de la position

|  | X[mm] | -6,213 | 0 | 6,213 |
|---|---|---|---|---|
| Y[mm] |  |  |  |  |
| 12,426 |  | 0,2 | 0,4 | 0,2 |
| 6,213 |  | 0,4 | 0,8 | 0,4 |
| 0 |  | 0,2 | 0,4 | 0,2 |

b) phases des patchs en fonction de la position

|  | X[mm] | -6,213 | 0 | 6,213 |
|---|---|---|---|---|
| Y[mm] |  |  |  |  |
| 12,426 |  | 165° | 340° | 165° |
| 6,213 |  | 0° | 175° | 0° |
| 0 |  | -165° | 10° | -165° |

3. Système selon la revendication 2, dans lequel le réseau de patchs de trois par trois comprend un réseau alimenté en parallèle de trois réseaux individuels de patchs trois par un configurés pour mettre en forme le diagramme de champ lointain dans le plan E par alimentation en série ou un réseau alimenté en série de trois réseaux individuels de patchs un par trois configurés pour mettre en forme le diagramme de champ lointain dans le plan H par alimentation en parallèle.

4. Système selon la revendication 1 ou 3, dans lequel les coefficients de transmission d'un réseau de trois patchs alimentés en série adaptés aux amplitudes données sont spécifiés comme suit (S21 de chaque patch individuel) :

| Antenne | Puissance de Rayonnement | S21[db] | S21[lin.] |
|---|---|---|---|
| Patch 1 | 0,166 | aucun | aucun |
| Patch 2 | 0,666 | -7,99 | 0,447 |
| Patch 3 | 0,166 | -0,79 | 0,912 |

dans lequel le déphasage entre les patchs est ajusté par des lignes de retard.

5. Système selon la revendication 4, dans lequel l'espacement entre les patchs est $\lambda/2$ = 6,213 *mm,* la longueur des patchs est d'environ $L_p$ = 3,167 à 3,4 mm, avec différentes longueurs des patchs, des espacements variables apparaissant entre les patchs, dans lequel un espace de 2,838 *mm* existe entre le patch 2 et le patch 3 et de 2,971 *mm* entre le patch 1 et le patch 2, lequel espace est utilisé pour l'ajustement de phase des patchs.

6. Système selon la revendication 5, dans lequel l'espace entre le patch 2 et le patch 3 est ajusté afin de réduire l'interférence de l'alimentation avec la réflexion du patch.

Fig. 1

Fig. 2

Fig. 3

Fig. 4

Farfield (Array) Directivity Abs (Phi=0)

Phi=0     Phi=180

○1 (45, 8.659)
○2 (45, 8.659)
○3 (0, -3.592)

Theta / Degree vs. dBi

Fig. 5

Farfield (Array) Directivity Abs (Phi=90)

Phi=90     Phi=270

○1 (33.7, 6.175)
○2 (33.7, 4.83)
○3 (0, -4.553)

Theta / Degree vs. dBi

Fig. 6

Fig.7

Fig.8

Fig.9

Fig. 10

Frequency/GHz

Fig. 11

Frequency/GHz

Fig. 12

Fig. 13

Frequency/GHz

Fig. 14

Farfield Directivity Abs (Phi=90)

1 (0, -3.317)
2 (33.7, 7.678)
3 (33.7, 5.806)

Theta / Degree vs. dBi

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004260554 A

- US 20070279303 A1

**Non-patent literature cited in the description**

- **C. WILL** ; **K. SHI** ; **F. LURZ** ; **R. WEIGEL** ; **A. KOELPIN**. Intelligent signal processing routine for instantaneous heart rate detection using a Six-Port microwave interferometer. *2015 International Symposium on Intelligent Signal Processing and Communication Systems (ISPACS)*, 2015, 483-487
- **C. WILL et al.** Local Pulse Wave Detection using Continuous Wave Radar Systems. *IEEE Journal of Electromagnetics, RF and Microwaves in Medicine and Biology*, vol. PP (99), 1-1

- **T. BROCKETT** ; **Y. RAHMAT-SAMII**. On the importance of sub-array design in the suppression of undesirable grating lobes. *2010 IEEE International Symposium on Phased Array Systems and Technology*, 2010, 745-750
- **S. MÜLLER** ; **R. THULL** ; **M. HUBER** ; **A. R. DIEWALD**. Analysis on microstrip transmission line surface coatings. *2016 Loughborough Antennas & Propagation Conference (LAPC)*, 2016, 1-4